# EUROPEAN PATENT APPLICATION

(11) **EP 4 734 536 A1**
(43) Date of publication of application: **29.04.2026**
(21) Application number: 24926930.9
(22) Date of filing: 31.12.2024
(51) Int. Cl.: H04N 21/81

(54) **POINT CLOUD DATA PROCESSING METHOD AND DEVICE AND STORAGE MEDIUM**

(30) Priority: 27.02.2024 CN 202410216859
(71) Applicant: ZTE Corporation, Shenzhen, Guangdong 518057 (CN)
(72) Inventor: LI, Qiuting, Shenzhen, Guangdong 518057 (CN)
(74) Representative: Ziebig Hengelhaupt Intellectual Property Attorneys Patentanwaltskanzlei PartGmbB
(86) International application number: PCT/CN2024/144267
(87) International publication number: WO 2025/180072

(57) **Abstract**

Embodiments of the present disclosure provide a point cloud data processing method and device and a storage medium. The point cloud data processing method comprises: receiving a point cloud data media file (S101), wherein the point cloud data media file comprises a timed metadata track associated with an object and/or a data box associated with the object, the timed metadata track is used for indicating object metadata in media, and the data box is used for indicating the object metadata in the media; on the basis of the point cloud data media file indicating the object metadata, acquiring object information in the point cloud data media file (S102); and performing media processing on point cloud data in the point cloud data media file on the basis of the object information (S103).

## Description

The present disclosure claims priority to Chinese Patent Application No. 202410216859.X, filed on February 27, 2024, which is hereby incorporated by reference in its entirety.

### TECHNICAL FIELD

The present disclosure relates to the technical field of media data processing, and in particular, to a point cloud data processing method and apparatus, and a storage medium.

### BACKGROUND

Immersive media is a technology that allows viewers to fully immerse themselves in media contents and gain an immersive experience. This form of media typically utilizes multiple sensory stimuli, such as visual, auditory, tactile, etc., to create a virtual environment similar to the real world, allowing the views to feel as if they are in the virtual world. Types of immersive media include virtual reality (VR), augmented reality (AR), holographic projection, etc. These technologies simulate human sensory organs (such as vision and hearing), thus creating a new audio-visual experience that allows the viewers to experience more realistic, vivid, and three-dimensional scenes and effects.

The immersive media may be classified into 3 degrees of freedom (3DoF) media, enhanced 3 degrees of freedom plus (3DoF+) media, and 6 degree of freedom (6DoF) media based on a degree of freedom in a case where a user is consuming media contents.

### SUMMARY

In one aspect, a point cloud data processing method is provided in the present disclosure. The point cloud data processing method includes:
receiving a point cloud data media file, where the point cloud data media file includes a timed metadata track associated with an object, and/or a data box associated with the object, where the timed metadata track is used to indicate object metadata in media, and the data box is used to indicate the object metadata in the media;
acquiring object information in the point cloud data media file based on the point cloud data media file for indicating the object metadata; and
performing media processing on point cloud data in the point cloud data media file according to the object information.

In another aspect, a point cloud data processing apparatus is provided in the present disclosure. The point cloud data processing apparatus includes:
a receiving module, configured to receive a point cloud data media files, where the point cloud data media file includes a timed metadata track associated with an object, and/or a data box associated with the object, where the timed metadata track is used to indicate object metadata in media, and the data box is used to indicate the object metadata in the media;
a processing module, configured to acquire object information in the point cloud data media file based on the point cloud data media file for indicating the object metadata; and
the processing module is further configured to perform media processing on point cloud data in the point cloud data media file according to the object information.

In yet another aspect, a point cloud data processing apparatus is further provided in the present disclosure. The point cloud data processing apparatus includes: a memory and a processor, where the memory is coupled to the processor, the memory is configured to store instructions executable for the processor, and the processor is configured, upon the instructions being executed, to perform the point cloud data processing method according to the above-mentioned aspect.

In yet another aspect, a computer program product including computer instructions is provided in the present disclosure. In a case where the computer instructions are run on a computer, the computer is enabled to execute the point cloud data processing method according to the above-mentioned aspect.

### BRIEF DESCRIPTION OF THE DRAWINGS

The accompanying drawings are used to provide a further understanding of technical solutions of the present disclosure, and are constituted as a part of the specification. The accompanying drawings are used to explain the technical solutions of the present disclosure together with the embodiments of the present disclosure, but do not constitute a limitation on the technical solutions of the present disclosure.
FIG. 1 is a schematic diagram of an architecture of an immersive media system according to the embodiments of the present disclosure.
FIG. 2 is a flowchart of a point cloud data processing method according to the embodiments of the present disclosure.
FIG. 3 is a flowchart of another point cloud data processing method according to the embodiments of the present disclosure.
FIG. 4 is a schematic diagram of a scene of a point cloud data processing method according to the embodiments of the present disclosure.
FIG. 5 is a flowchart of yet another point cloud data processing method according to the embodiments of the present disclosure.
FIG. 6 is a schematic diagram of an ISO media file according to the embodiments of the present disclosure.
FIG. 7 is a schematic diagram of another ISO media file according to the embodiments of the present disclosure.
FIG. 8 is a schematic diagram of yet another ISO media file according to the embodiments of the present disclosure.
FIG. 9 is a flowchart of yet another point cloud data processing method according to the embodiments of the present disclosure.
FIG. 10 is a schematic diagram of composition of a point cloud data processing apparatus according to the embodiments of the present disclosure.
FIG. 11 is a structural schematic diagram of a point cloud data processing apparatus according to the embodiments of the present disclosure.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.

In the description of the present disclosure, unless otherwise specified, a character "/" means an "or" relationship, for example, "A/B" may represent A or B. The "and/or" herein is merely an association relationship for describing associated objects, and used for indicating that there may be three relationships, for example, A and/or B may represent: only A; only B; or both A and B. In addition, "at least one" means a number of one or more, and "plurality" means a number of two or more. The wordings such as "first," "second," etc., do not limit quantity or an execution order, and the wordings such as "first," "second," etc., do not limit that corresponding objects are different, either.

It should be noted that in the present disclosure, wordings, such as "exemplarily" or "for example" and variations thereof are used to indicate examples, instances, or illustrations. Any embodiment or design solution described in the present disclosure as "exemplarily" or "for example" should not be illustrated as being more preferred or advantageous over other embodiments or design solutions. Specifically, the usage of the wordings such as "exemplarily" or "for example" is intended to present related concepts in a concrete way.

In order to better present users' viewing contents, it is necessary to perform differentiation processing on different parts of the contents. For example, key regions are adopted to high-quality media contents and more resources are allocated for media processing, and non-key regions are adopted to general quality media content sources, etc. Therefore, the users' viewing experience may be improved, but the processing pressure on the network and terminals may further be reduced. At present, for an immersive media system, object information may be indicated at a file encapsulation layer, so that differentiation processing may be performed on different contents of the immersive media based on the object information. However, due to the diverse application scenes of the immersive media system, such as almost static objects in videos and the need for media processing based on user location, current differentiation processing on contents cannot meet the requirements of transmission and media processing in different scenes.

In view of this, a point cloud data processing method is provided in the present disclosure, and the method includes: receiving a point cloud data media file, where the point cloud data media file includes a timed metadata track associated with an object, and/or a data box associated with the object, where the timed metadata track is used to indicate object metadata in media, and the data box is used to indicate the object metadata in the media; obtain object information from point cloud data media files based on indicator object metadata; acquiring object information in the point cloud data media file based on the point cloud data media file for indicating the object metadata; and performing media processing on point cloud data in the point cloud data media file according to the object information. Based on the object information, perform media processing on the point cloud data in the point cloud data media file.

In this way, for various scenes of immersive media such as a user viewport, performing media processing based on a user position, and viewport including a static object, the technical solutions provided in the present disclosure may provide various corresponding media processing modes for various scenes, thus to perform differentiated transmission and media processing based on a portion of scenes within a viewport range among the various scenes and object information of one or more point cloud data objects in the scenes, thus meeting the requirements for the various scenes of the immersive media and enhancing the flexibility of differentiated media processing. Moreover, differentiated media processing, such as using high-quality media contents for point cloud data corresponding to the point cloud data objects, and allocating more resources for media processing may be used to meet better immersive experiences and optimize the presentation quality of media. Other regions may further be adopted to lower quality media contents with being allocated fewer resources for media processing, thus to reduce the processing pressure on the network and terminals, thereby improving the transmission efficiency and processing capability of media contents.

Immersive media is a technology that allows viewers to fully immerse themselves in media contents and gain an immersive experience. This form of media typically utilizes multiple sensory stimuli, such as visual, auditory, tactile, etc., to create a virtual environment similar to the real world, allowing the views to feel as if they are in the virtual world.

The above-mentioned point cloud data is one of the important data sources for immersive media. The point cloud data is a collection of a set of randomly distributed discrete points in space for expressing a spatial structure and surface properties of a three-dimensional item or scene. Each point in point cloud data includes at least three-dimensional position information, and besides the position information, color, material, or other information may further be included. Thus, the point cloud data may be used to generate a three-dimensional model, scene reconstruction, virtual reality, etc. In the immersive media, the point cloud data may be used to construct virtual scenes, virtual characters, virtual items, etc., thereby achieving a more realistic and vivid virtual environment.

In addition, acquisition for the point cloud data may also include the following manners: computer generation, three-dimensions (3D) laser scanning, 3D photogrammetry, etc. A computer may generate point clouds of virtual three-dimensional items and scenes. The point cloud data of static real-world three-dimensional items or scenes may be obtained through 3D scanning with acquiring millions of point cloud data obtained per second. The point cloud data of dynamic real-world three-dimensional items or scenes may be obtained through a 3D camera with acquiring multi-millions of point cloud data obtained per second. Thus, the cost and time period for acquiring the point cloud data may be reduced, and the accuracy of the data may be improved. The transformation of point cloud data acquisition manner has made it possible to obtain a large amount of point cloud data. With the continuous accumulation of large-scale point cloud data, efficient storage, transmission, publishing, sharing, and standardization for point cloud data have become the key to point cloud applications.

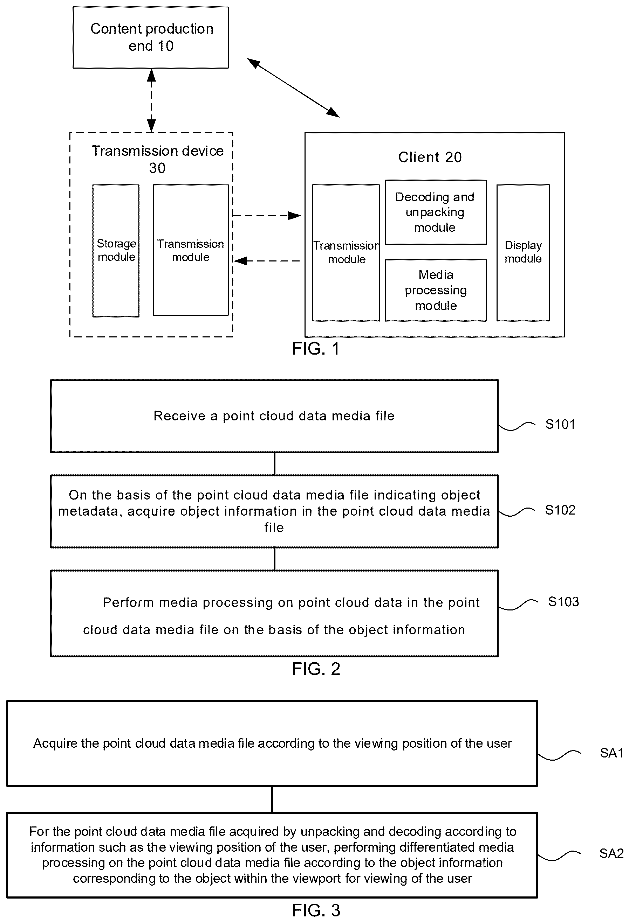

As shown in FIG. 1, an immersive media system is provided in the present disclosure, and the immersive media system includes a content production end 10 and a client 20. The content production end 10 is configured to acquire and produce immersive media contents, and perform encoding and encapsulate the contents to obtain encapsulated media files (such as point cloud data media files) for carrying the immersive media contents. Therefore, the content production end 10 may be referred to as a content production apparatus, an encoding apparatus, etc. The client 20 may perform unpacking, decoding, media rendering, and other processing on the point cloud data media files generated by the content production end 10.

The content production end 10 is configured for offline or online media content production, and may also be configured to load third-party media contents.

The client 20 at least includes a transmission module, a decoding and unpacking module, a media processing module, and a display module. The transmission module is configured to receive a point cloud data media file or send a request message to request the point cloud data media file. The decoding and unpacking is configured for decoding and unpacking a point cloud data media file received through the transmission module. The media processing module is configured to perform reconstructing, rendering, or other processing on media data output by the decoding and unpacking module according to a current viewing position of a user, a viewport for viewing, or a recommended viewport for viewing by a director. The display module is configured to present visual contents of a current viewport for a user to the user. The display module may include various display components, such as liquid crystal display (LCD), plasma display, organic light-emitting diode (OLED) display, etc.

In some embodiments, the forms of the content production end 10 and the client 20 may be various apparatuses, such as servers. The server may be an independent physical server, may be a server cluster or distributed system composed of multiple physical servers, or may be a cloud server that provides basic cloud computing services such as cloud services, cloud databases, cloud computing, cloud storage, network services, cloud communication, middleware services, domain name services, security services, content distribution networks, big data servers, etc. As another example, the content production end 10 and client 20 may be various terminal devices, such as mobile phones, pads, desktop computers, laptops, handheld computers, notebook computers, ultra-mobile personal computers (UMPCs), netbooks, as well as cellular phones, personal digital assistants (PDAs), augmented reality (AR), virtual reality (VR) devices, or the like.

In some embodiments, the content production end 10 and the client 20 in FIG. 1 may be two separate devices. Alternatively, the content production end 10 and the client 20 may be the same device. That is, the content production end 10 or corresponding functions of the content production end 10 and the client 20 or corresponding functions of the client 20 may be integrated on the same device.

Communication may be established between the content production end 10 and client 20. For example, the client 20 may directly receive a point cloud data media file from the content production end 10. As another example, as shown in FIG. 1, there may be a transmission device 30 between the content production end 10 and the client 20, and the client 20 may receive the point cloud data media file from the content production end 10 through the transmission device 30.

The transmission device 30 includes at least a storage module and a transmission module. The storage module is configured to store a point cloud data media file produced or loaded by the content production end, which may include any of a variety of distributed or locally accessible data storage media, such as a hard drive, a Blu-ray disc, a digital video disc (DVD), a compact disc read-only memory (CD-ROM), a flash memory, a volatile or non-volatile memory, or any other suitable digital storage media used to store encoded video data. The transmission module is configured to receive a request message from the client, or transmit a stored point cloud data media file to the client. The transmission process may be implemented through wireless networks provided by a communication provider, locally established wireless local area networks, or wired manners.

In addition, the form of transmission device 30 may also be any of various devices such as servers and terminal devices described above, which will not be listed herein.

It should be noted that FIG. 1 is merely an exemplary framework diagram, and a number of devices or nodes and names of the various devices included in FIG. 1 are not limited. In addition to functional nodes shown in FIG. 1, the system may further include other nodes or devices.

The system architecture and service scenes described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of network architecture and the emergence of new service scenes, the technical solutions provided in the embodiments of the present disclosure are also applicable to similar technical problems.

The embodiments provided in the present disclosure may be illustrated below in detail in combination with the accompanying drawings of the specification. Exemplarily, the embodiments may be applied to various computing devices capable of unpacking, decoding, media rendering, and other processing on the point cloud data media files, such as the client 20 in FIG. 1. That is, the client 20 may acquire a point cloud data media file and perform media processing on the point cloud data in the point cloud data media file according to the technical solutions.

As shown in FIG. 2, a point cloud data processing method is provided in the present disclosure, and the method includes the following steps S101-S103.

In S101, a point cloud data media file is received.

A point cloud data media file is a file format used for storing and exchanging three-dimensional point cloud data.

In some embodiments, the file format of the point cloud data media file may be an International Organization for Standardization (ISO) basic media file format. Since each point in the point cloud data includes at least three-dimensional position information, thus omnidirectional video data may be stored in the above point cloud data media file based on the ISO basic media file format. The ISO basic media file format may include, but not limited to, a restricted scheme information box, an track reference box, a track group box, etc. The operation for ISO basic media file formats, such as the restricted scheme information box, track reference box, and track group box may be implemented by referring to a universal digital media file format-MPEG-4 Part 12 ISO Base Media File Format-which is defined by the moving picture experts group (MPEG) of ISO/IEC JTC1/SC29/WG11 (International Organization for Standardization/International Electrotechnical Commission Joint Technical Committee 1/Subcommittee 29/Working Group 11).

In addition, a file structure defined by the ISO basic file format may be composed of a series of boxes. The ISO basic file format represented by MP4 files may include several boxes, each of the boxes has attributes including a type and a length, which may be considered as a data object. A box may include another box, thus the box may be referred to as a container box. Further, each box has its specific type and length, which together form a logical structure of the file.

An MP4 file first has, and only has one file type box (ftyp), an "ftyp" box may be the beginning of a file and may serve as a symbol of the file format, which may store some basic information (such as a version of the file format, a compatible container format, etc.) about the file. Afterwards, there will be only one "MOOV" type box (or referred to as movie box), which is a container box. A sub box of the "MOOV" box includes metadata information (such as a timestamp, encoding information, etc.) of the point cloud data media file. In some examples, the "MOOV" box may be located at the end of the file, so that all metadata information may be quickly found upon reading the file. Media data of the MP4 file is included in an "mdat" type box (or referred to as media data box). An "mdat" box is also a container box. The quantity of the "mdat" box may be one or multiple, or there is no "mdat" box in the file. For example, in a case where all media data references other files, a structure of the media data is described by metadata. The "mdat" box include actual media data, such as audio samples, video frames, etc. In a case of multiple "mdat" boxes, each box includes a portion of media data. To further support the metadata description for the media, a "meta" type box (or referred to as meta box) may be used, which is an optional container box. The "meta" box may be used to describe some general or additional non-timed metadata, such as codec information, subtitle data, etc.

In some embodiments, the point cloud data media file may be acquired according to a viewing position of a user or a recommended viewport.

In one example, as shown in FIG. 3, SA1 (i.e., acquiring the point cloud data media file according to the viewing position of the user) may be performed.

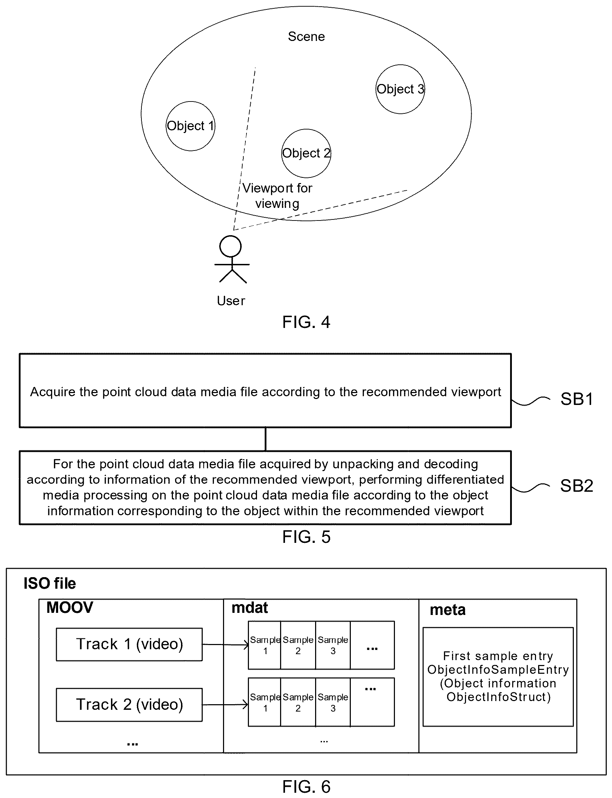

For example, a client may analyze and determine a viewport for viewing corresponding to the position where the user is located in combination with information such as the viewing position of the user and other information, so as to acquire the point cloud data media file corresponding to the viewport for viewing. What is carried in the point cloud data media file corresponding to the viewport for viewing is the media content that the client may display to the user through the viewport for viewing. As shown in FIG. 4, a current overall scene includes an object 1, an object 2, and an object 3, where the object 2 and the object 3 are located within the viewport for viewing corresponding to the current position that the user is capable of viewing. Therefore, the acquired point cloud data media file corresponding to the viewport for viewing includes point cloud data related to the object 2 and object 3.

In another example, as shown in FIG. 5, SB1 (i.e., acquiring the point cloud data media file according to the recommended viewport) may be performed.

For example, the client may acquire the point cloud data media file in combination with the recommended viewport. Combining with the recommended viewport, what is carried in the acquired point cloud data media file is the media content that the client may display to the user through the recommended viewport. In addition, the recommended viewport may be a viewport corresponding to a preset suitable display perspective based on contents in the point cloud data media file. The recommended viewport may be a dynamic viewport, for example, in a scene of a game or virtual reality, transformation of the dynamic viewport may allow a viewer to experience plots and actions in the scene firsthand. Thus, more realistic and three-dimensional visual effects may be provided, thus enhancing immersion. In some embodiments, the recommended viewport may include a recommended viewport generated according to the intention of a director or content provider, a recommended viewport according to statistics of current user viewing data, a recommended viewport generated according to viewports selected by other users except the current user, a recommended initial viewport, a recommended viewport associated with a specific spatial region, or other possible recommended viewports customized by the user.

In S102, object information in the point cloud data media file based on the point cloud data media file for indicating the object metadata.

An object in the above-mentioned object information refer to a portion of a scene and one or more point cloud data objects within the scene appearing in a viewport range during a viewing process of the user. As shown in FIG. 4, the scene includes the object 1, the object 2, and the object 3, where the object 2 and the object 3 are within the viewport for viewing of the user, thus the object 2 and the object 3 may be determined as the above-mentioned objects. In addition, the object can be a person, an item, an animal, a scene interaction point, etc., in the scene. It should be noted that in an immersive media scene, due to the fact that user's attention is often focused on certain regions of the viewport for viewing, such as people and important items in the scene, and visual perception of the human eye is limited, sensitivity and resolution of the human eye to different regions on the screen are different, as well as reasons such as real-time interaction requirements of network resources, adaptability to different devices and network conditions, etc., images in the immersive media scene may be distinguished into key regions and non-key regions. High-quality processing on the key regions may better match the visual perception characteristics of the human eye, allocate computing and network resources more effectively, make media content more flexible to adapt to different devices and network conditions, and provide a consistent and high-quality user experience.

In an immersive scene, one or more objects may be included, and a region where these objects are located is a region that the user's attention is focused on observing in the scene. The point cloud data corresponding to these objects in the point cloud data object file needs to be processed with high quality to better match the visual perception characteristics of the human eye. Therefore, the region where these objects are located may be understood as the key region in the immersive scene. Furthermore, within the viewport range, all or a portion of the objects in the immersive scene may be included, and the all or a portion of the objects may be understood as the key regions in the current viewport. High quality media contents may be used for contents of these objects, and more resources need to be allocated for the corresponding media processing.

In addition, the above-mentioned objects may be dynamic objects or static objects.

In some embodiments, the object information may include one or more of: an identifier of an object information item, item description information corresponding to the object information item, an anchor coordinate of a spatial region where the object is located, size information of the spatial region where the object is located, or point cloud slice information including the object.

The object information item refer to an individual data element or record used for consisting of the "object information". Each item may include information about an aspect of the object, such as an identifier of the object, description of the object, a position of the object, a size of the object, and relationship of the object with the point cloud data. The identifier of the object information item may be a symbol or code of a unique identified object, which may be used to distinguish different objects. The item description information corresponding to the object information item may include a detailed description of the object itself, such as descriptions of a name, type, function, material, etc., of the object. The anchor coordinate of the spatial region where the object is located may be used to indicate a coordinate of a reference point (anchor point) of the object in space, in order to determine the position of the object in space based on the anchor coordinate. The size information of the spatial region where the object is located is used to describe a size or range of the object in space, which may include length, width, height, etc. The point cloud slice refers to a set of discrete point data, typically used to represent a surface shape of an item. The point cloud slice information including the object is used to represent a portion of point cloud data associated with the object.

Moreover, the object metadata may be regarded as a portion of the object information. The object metadata provides descriptive information about the object itself, used to describe various aspects of object information, such as a creation time, a modification time, a file size, a data type, etc., which are conducive to better organizing, searching, and managing the object information.

In some embodiments, the point cloud data media file may include object information to describe information related to the object in the scene. For example, a structure ObjectInfoStruct of the object information is as follows:

```
 aligned(8) class ObjectInfoStruct() {
       unsigned int(16) ref_object_info_id;
        unsigned int(1) object_oid_flag;
       unsigned int(1) object_spatial_info_flag;
       unsigned int(1) object_slice_info_flag;
       bit(5) reserved;
       if(object_oid_flag == 1){
           string object_oid;
       }
       else{
           string object_label;
       }
       if(object_spatial_info_flag==1){
                   3DPoint() anchor;
               CuboidRegionStruct() cuboidRegion;
       }
       if(object_slice_info_flag){
               SliceMapping() slice_info;
       }
      }
  }
```

where ref_object_info_id is used to indicate the identifier of the corresponding item information item.

object_oid_flag is used to indicate an indication form for the item description information. In a case where a value of object_oid_flag is 0, it may refer to that the item description information is indicated in the form of a string that is readable by the human eye. In a case where the value of object_oid_flag is 1, it may refer to that the item description information is indicated in the form of OID (object identifier).

object_info_id is used to indicate the identifier of the corresponding item information item.

object_oid is used to indicate the item description information corresponding to the corresponding item information item, which is indicated in the form of OID.

object_label is used to indicate the item description information corresponding to the corresponding item information item, and is indicated in the form of a string that is readable by the human eye.

In a case where a value of object_spatial_info_flag is 0, it refers to not indicating specific spatial information corresponding to the item; in a case where the value of object_spatial_info_flag is 1, it refers to indicating the specific spatial information corresponding to the item.

In a case where a value of object_slice_info_flag is 0, it refers to not indicating point cloud slice information corresponding to the item; in a case where the value of object_slice_info_flag is 1, it refers to indicating the point cloud slice information corresponding to the item.

3DPoint indicates an anchor coordinate of the spatial region where the object is located.

CuboidRegionStruct indicates the size information of the spatial region where the object is located, that is, an extension of a 3D spatial region relative to an anchor in the x, y, and z axes in the Cartesian coordinate system.

SliceMapping indicates the point cloud slice information, which indicates a number of slices associated with the 3D spatial region and identifies point cloud slices associated with the spatial region.

In some embodiments, the point cloud data media file includes a timed metadata track associated with an object, and/or a data box associated with the object, where the timed metadata track is used to indicate object metadata in media, and the data box is used to indicate the object metadata in the media.

It should be understood that the timed metadata track is a mechanism for establishing an association with a specific sample in the ISO base media file format (ISOBMFF). The coupling between timed metadata and media data is relatively small, usually is descriptive.

Exemplarily, in a case where the point cloud data media file includes the timed metadata track associated with the object, the timed metadata track associated with the object may include: a first timed metadata track, and/or a second timed metadata track.

In some embodiments, in a case of acquiring the point cloud data media file according to the viewing position of the user, the timed metadata track associated with the object included in the point cloud data media file may include the first timed metadata track.

Thus, the point cloud data in the point cloud data media file may be identified according to an object metadata sample item in the first timed metadata track, so as to obtain the object information.

Exemplarily, as shown in FIG. 3, SA2 (i.e., for the point cloud data media file acquired by unpacking and decoding according to information such as the viewing position of the user, performing differentiated media processing on the point cloud data media file according to the object information corresponding to the object within the viewport for viewing of the user) may be performed.

The first timed metadata track includes information of a dynamic viewport and the object information corresponding to the object in the viewport.

For example, the point cloud data media file may include the first timed metadata track, and the first timed metadata track may also be referred to as an object information timed metadata track. The object information included in the first timed metadata track may be used to describe objects present in each frame of an image/scene at different times. Thus, differentiated media processing is performed on the object information corresponding to a current viewing position or viewport for viewing of the user. In addition, a first sample entry point is a sample entry of the first timed metadata track (i.e., the object information timed metadata track). The first sample entry may be a sample entry ObjectInfoSampleEntry that extends MetaDataSampleEntry. Further, the first timed metadata track may be identified through a type identifier of the first sample entry, for example, the first timed metadata track (i.e., the object information timed metadata track) may be identified based on the type identifier "obdi" of the first sample entry. Further, the first sample entry further includes initial object information.

Exemplarily, the first sample entry ObjectInfoSampleEntry may include:

```
aligned(8) class ObjectInfoSampleEntry extends MetaDataSampleEntry ('obdi')
 {
        unsigned int(16) num_objects;
    for(i=0;i<num_objects;i++){
               ObjectInfoStruct();
    }
    }
```

where num_objects is used to indicate a number of item information items included in a current sample. In a case where a value of this field is 0, it refers to that the current sample does not include any item information item.

ObjectInfoStruct is used to describe specific information of each object.

In some embodiments, each sample in the first timed metadata track (i.e., the object information timed metadata track) is in a fixed format. Each sample object change information included within the viewport for viewing of the user. Exemplarily, a format ObjectlnfoSample of a sample may include:

```
aligned(8) ObjectInfoSample() {
       unsigned int(16) num_object_update;
       for(i=0;i<num_object_update;i++){
       unsigned int(1) object_canceled_flag;
       bit(7) reserved;
       if(object_canceled_flag == 0){
           ObjectInfoStruct();
       }
       else
            unsigned int(16) ref_object_info_id;
       }
       }
```

where num_object_update is used to indicate a number of information item in which the item information included in the current sample has changed compared to that of a previous sample. Moreover, in a case where the num_object_update field takes a value of 0, it refers to that the item information included in the current sample is the same as that of a previous synchronized sample.

In a case where the value of object_canceled_flag is 1, it refers to that the corresponding item is no longer included in the current sample. In a case where the value of object_canceled_flag is 0, it refers to that the corresponding item is included in the current sample but has been updated.

ObjectInfoStruct is used to indicate specific object information.

ref_object_info_id is used to indicate an object identifier in the current sample.

Exemplarily, as shown in FIG. 6, the ISO media file (or referred to as ISO file) may include a "MOOV" type box, and track 1 and track 2 within the MOOV box; a box of type 'mdat' and the corresponding samples (sample 1, sample 2, sample 3, etc.) for various tracks in the mdat box, a first sample entry ObjectInfoSampleEntry in the box of type 'meta', and corresponding object information ObjectlnfoStruct.

In some embodiments, the point cloud media file may be encapsulated in a single track mode, that is, all point cloud data may be encapsulated directly in a media track without splitting. In this way, the above-mentioned ObjectInfoStruct structure may be added to the description of a sub sample in the media track to describe the object information, so that the point cloud data included in the sub sample corresponds to one or more objects.

In some embodiments, in a case of acquiring the point cloud data media file according to the recommended viewport, the timed metadata track associated with the object included in the point cloud data media file may include the second timed metadata track.

Thus, the point cloud data in the point cloud data media file may be identified according to an object metadata sample item in the second timed metadata track, so as to obtain the object information.

Exemplarily, as shown in FIG. 5, SB2 (i.e., for the point cloud data media file acquired by unpacking and decoding according to information of the recommended viewport, performing differentiated media processing on the point cloud data media file according to the object information corresponding to the object within the recommended viewport) may be performed. Information of a recommended dynamic viewport includes the object information, and the client may perform differentiated media processing according to presentation requirements.

The second timed metadata track includes object information corresponding to an object in the recommended viewport.

Exemplarily, the point cloud data media file may include the second timed metadata track, and the second timed metadata track may also referred to as recommended viewport timed metadata track. The object information included in the second timed metadata track may be used to describe information of the recommended viewport for viewing (i.e., the above-mentioned recommended viewport) by a director at different times. Based on the recommended viewport for viewing by the director, a user terminal may acquire the point cloud data media file corresponding to the viewport for viewing in advance, and perform differentiated media processing on the media content (such as objects) within the viewport for viewing according to the object information in the point cloud data media file.

In some embodiments, the second timed metadata track sample entry includes a first identifier, where the first identifier is used to indicate a type of the viewport including the object information.

In addition, the second sample entry point is a sample entry point of the second timed metadata track (i.e., dynamic viewport timed metadata track). The second sample entry may be a sample entry ViewportlnfoSampleEntry that extends MetaDataSampleEntry.

Further, the second timed metadata track may be identified through a type identifier of the second sample entry, for example, the second timed metadata track (i.e., the dynamic viewport timed metadata track) may be identified based on the type identifier "avpt" of the second sample entry. Further, the second sample entry further includes initial object information.

For example, the second sample entry ViewportInfoSampleEntry may include:

```
    aligned(8) class ViewportInfoSampleEntry() extends MetadataSampleEntry ('avpt') {
          ViewportInfoConfigurationBox();
          unsigned int(1) object_flag;
          if (object_flag==1){
          unsigned int(16) num_objects;
          for(i=0;i<num_objects;i++){
               ObjectInfoStruct();
             }
         }
    }
```

where object_flag is used to indicate whether the dynamic viewport timed metadata track includes object information.

num_objects is used to indicate a number of objects included in an initial viewport.

ObjectInfoStruct is used to indicate specific information of an object.

In some embodiments, ObjectInfoStruct() included in the above-mentioned ViewportInfoSampleEntry() may be replaced with ObjectBox, where one ObjectBox may include information of one or more objects. That is, the point cloud data media file includes a data box ObjectBox associated with the object, and the data box ObjectBox is used to indicate object metadata in the media, and a number of objects may be one or more.

For example, in a case of acquiring the point cloud data media file according to the recommended viewport, the data box associated with the object may be configured as a viewport information configuration data box ViewportlnfoConfigurationBox, which may be used to describe a type of the viewport, a camera intrinsic parameters and extrinsic parameters corresponding to the viewport, and other information. The viewport information configuration data box ViewportlnfoConfigurationBox may include:

```
    aligned(8) class ViewportlnfoConfigurationBox extends FullBox('avpc', version=0, 0)
    {
          unsigned int(8) viewport_type;
          string viewport_description;
          unsigned int(1) dynamic_int_camera_flag;
          unsigned int(1) dynamic_ext_camera_flag;
          bit(6) reserved = 0;
          if (dynamic_int_camera_flag == 0) {
               IntCameraInfoStruct();
          }
          if (dynamic_ext_camera_flag == 0) {
               ExtCameraInfoStruct();
          }
    }
```

where viewport_type (i.e., the first identifier mentioned above) is used to indicate types of viewports of all samples corresponding to a current sample entry. Exemplarily, meanings of values of viewport_type is shown in Table 1.

**Table 1**

| Value | Description |
|---|---|
| 0 | Recommended viewport generated according to intention of a director or a content provider |
| 1 | Recommended viewport according to statistics of current user viewing data |
| 2 | Recommended viewport generated according to viewports selected by other users except the current user |
| 3 | Recommended initial viewport |
| 4 | Recommended viewport associated with a specific spatial region |
| 5..239 | Reserved |
| 240..255 | Customized |

viewport_description is a string that ends with a null character, and provides textual description information for the recommended viewport.

dynamic_int_camera_flag is used to indicate changes in camera intrinsic parameters of all samples corresponding to the current sample entry. In a case where a value of dynamic_int_camera_flag is 0, it refers to that the camera intrinsic parameters of all samples corresponding to the current sample entry are fixed and unchanged. In a case where a value of dynamic_int_camera_flag is 1, it refers to that the camera intrinsic parameters of all samples corresponding to the current sample entry dynamically changes.

dynamic_ext_camera_flag is used to indicate changes in camera extrinsic parameters of all samples corresponding to the current sample entry. In a case where a value of dynamic_ext_camera_flag is 0, it refers to that the camera extrinsic parameters of all samples corresponding to the current sample entry are fixed and unchanged. In a case where a value of dynamic_ext_camera_flag is 1, it refers to that the camera extrinsic parameters of all samples corresponding to the current sample entry dynamically changes.

In a case where a value of viewport_type field is 3, the viewport timed metadata indicates information of the recommended initial viewport, which includes an initial viewport position and rotation information. In a case where the point cloud media needs to start playing with a specific initial viewport (not a default initial viewport), the viewport timed metadata track may be indexed to the AVS point cloud track. In a case of missing metadata of this type, default values for cam-pos_x, cam-pos_y, cam-pos_z, camquat_x, camquat_y, and camquat_z of the initial viewport are all 0.

IntCameralnfoStruct is used to indicate camera intrinsic information corresponding to the viewport.

ExtCameralnfoStruct is used to indicate camera extrinsic information corresponding to the viewport.

In some embodiments, each sample in the second timed metadata track (i.e., the dynamic viewport timed metadata track) is in a fixed format. Each sample includes dynamic viewport information and object change information included within the viewport. For example, a format ViewportlnfoSample of a sample ViewportlnfoSample may include:

```
    aligned(8) class ViewportInfoSample() {
       unsigned int(8) num_viewports;
       for (i=1; i <= num_viewports; i++){
           unsigned int(7) viewport_id[i];
           unsigned int(1) viewport_cancel_flag[i];
           if (viewport_cancel_flag[i] == 0) {
               unsigned int(1) camera_extrinsic_flag[i];
               unsigned int(1) camera_intrinsic_flag[i];
               unsigned int(1) slice_info_flag[i];
               bit(5) reserved = 0;
               ViewportInfoStruct(camera_extrinsic_flag[i], camera_intrinsic_flag[i]);
               if(slice_info_flag[i] == 1){
       unsigned int(8) num_slices;
       for (j=0; j < num_ slices; j++) {
                 unsigned int(16) slice_id;
           }
        if (object_flag==1){
             unsigned int(16) num_object_update;
            for(i=0;i<num_object_update;i++){
                   unsigned int(1) object_canceled_flag;
                   bit(7) reserved;
                   if(object_canceled_flag == 0){
                         ObjectInfoStruct();
                   }
                  else
                    unsigned int(16) ref_object_info_id;
               }
          }
       }
    }
```

In some embodiments, the second timed metadata track (i.e., the dynamic viewport timed metadata track) needs to include camera extrinsic information ExtCameraInfoStruct(), which may be included in the sample entry or in the sample.

In a case where a value of dynamic_ext_camera_flag is 1, at least one value of camera_extrinsic_flag[i] in all samples is 1.

num_viewports is used to indicate a number of viewports indicated in the sample.

viewport_id[i] is used to indicate an identifier of a corresponding viewport.

In a case where a value of viewport_cancel_flag[i] is 1, it refers to that a viewport with a value of the viewport identifier of viewport_id[i] is cancelled. In a case where a value of viewport_cancel_flag[i] is 0, it refers to that related information of a viewport with a value of the viewport identifier of viewport_id[i] is indicated in the sample.

camera_intrinsic_flag[i] is used to indicate whether there is a camera intrinsic parameter in an i-th viewport, and in a case where a value of camera_intrinsic_flag[i] is 1, it refers to that there is a camera intrinsic parameter in the i-th viewport in the current sample. In a case where a value of camera_intrinsic_flag[i] is 0, it refers to that the i-th viewport in the current sample does not indicate a camera intrinsic parameter. In addition, in a case where a value of dynamic_int_camera_flag is 0, a value of the field camera_intrinsic_flag[i] is also 0.

camera_extrinsic_flag[i] is used to indicate whether there is a camera extrinsic parameter in the i-th viewport. In a case where a value of camera_extrinsic_flag[i] is 1, it refers to that there is a camera extrinsic parameter in the i-th viewport in the current sample. In a case where a value of camera_extrinsic_flag[i] is 0, it refers to that the i-th viewport in the current sample does not indicate a camera extrinsic parameter. In addition, in a case where a value of dynamic_ext_camera_flag is 0, a value of the field camera_extrinsic_flag[i] is also 0.

slice_info_flag[i] is used to indicate whether the i-th viewport in the current sample is associated with corresponding slice information. In a case where a value of slice_info_flag[i] is 1, it refers to that the i-th viewport in the current sample is associated with the corresponding slice information. In a case where a value of slice_info_flag[i] is 0, it refers to that the i-th viewport in the current sample is not associated with the corresponding slice information.

num_slices is used to indicate a number of slices associated with the current viewport.

slice_id is used to indicate an identifier of a slice.

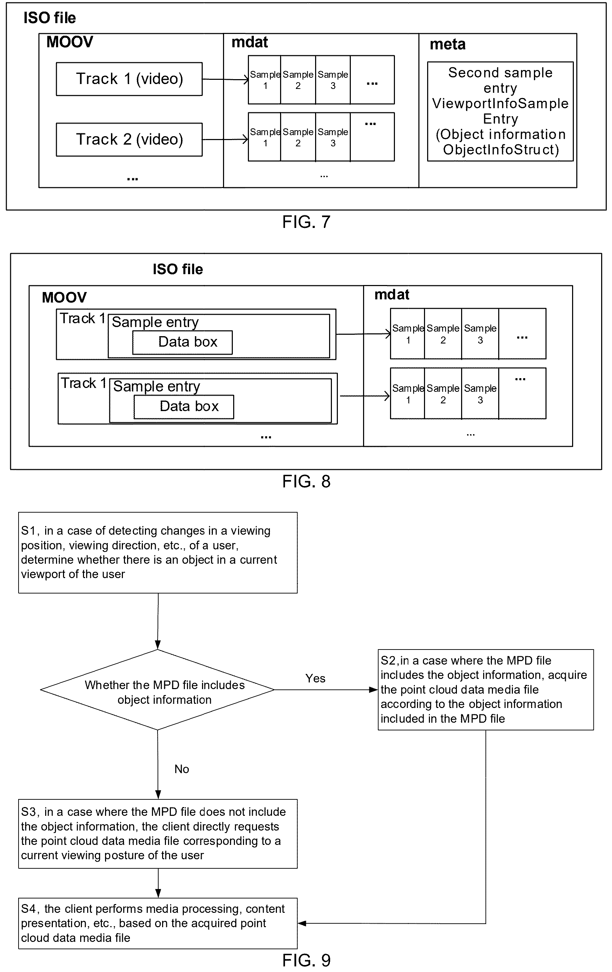

Exemplarily, as shown in FIG. 7, the ISO media file may include a "MOOV" type box, and track 1 and track 2 within the MOOV box; a box of type 'mdat' and the corresponding samples (sample 1, sample 2, sample 3, etc.) for various tracks in the mdat box, a second sample entry ViewportlnfoSampleEntry in the box of type 'meta', and corresponding object information ObjectlnfoStruct.

In some embodiments, the point cloud data media file includes a first data box, where the first data box includes information of a static object.

Thus, the object information may be acquired from the first data box in the point cloud data media track sample entry.

The static object is used to indicate an object whose position is relatively fixed in the scene. For example, objects such as people, items, animals, and scene interaction points that keep in a still state in their corresponding positions within a certain period of time in the scene.

In some embodiments, the first data box may be identified according to a first data box identifier. Then, the object information is further acquired from the first data box in the point cloud data media track sample entry.

In some embodiments, the first data box may be a geometric component track in the point cloud data media file, and a sample entry AVSPCCSampleEntry of a point cloud track includes a static object data box objectBox, which is used to describe object information corresponding to the point cloud track and point cloud geometric component track (and associated attribute component track), and includes:

```
    aligned(8) class ObjectBox extends FullBox(' objt ',0,0){
    unsigned int(16) num_objects;;
      for (int i=0; i < num_objects; i++) {
       ObjectInfoStruct();
    }
    }
```

where num_objects is used to indicate a number of objects.

ObjectInfoStruct is used to indicate specific information of an object.

Exemplarily, as shown in FIG. 8, the ISO media file may include a "MOOV" type box, and track 1 and track 2 within the MOOV box, where a sample entry corresponding to the track 1 and a data box ObjectBox for carry object information and a sample entry corresponding to the track 2 and a data box ObjectBox for carry object information; a box of type "mdat" and the corresponding samples (sample 1, sample 2, sample 3, etc.) for various tracks in the mdat box.

In some embodiments, in a case where the object is closely associated with a spatial region in a spatial region information data box, the object information may also be described in the spatial data box in the point cloud data media file, where one spatial data box includes one or more sub spatial data boxes, and the object information may be included in one sub spatial data box. In addition, an indication identifier may be added to the point cloud data media file to indicate whether such object information is included through the indication identifier.

In some embodiments, in a case where a position or corresponding slice in the scene/space where the object is located does not change frequently, the object information corresponding to each sample group may also be described through a sample group.

In some embodiments, num_objects and ObjectInfoStruct in the above-mentioned first sample entry ObjectInfoSampleEntry or the above-mentioned second sample entry ViewportlnfoSampleEntry may also adopt the ObjectBox provided in the present disclosure to represent a number and a structure of included objects and describe object information.

In some embodiments, the dynamic viewport timed metadata track and the object information timed metadata track or the first data box may coexist, where the dynamic viewport timed metadata track only includes the object information timed metadata track or the object identifier defined in the first data box, that is, the object information timed metadata track or the specific object information defined in the first data box may be associated with the object identifier.

In S103, media processing is performed on point cloud data in the point cloud data media file.

For example, the content production end may encode point cloud media, encapsulate the encoded data stream, and transmit it to the client. Correspondingly, the client may first unpack, decode, and process a point cloud file to present the media content recorded in the point cloud data media file to the user. The client may render an obtained 3D image according to metadata related to rendering and viewport in the media presentation description information. Once the rendering is completed, the playback output for the 3D image is implemented.

In some embodiments, the above-mentioned media processing includes differentiated rendering and/or differentiated data transmission.

In some embodiments, the above media processing can be implemented as:
processing first point cloud data based on a first processing mode, and processing second point cloud data based on a second processing mode.

The first point cloud data includes point cloud data corresponding to at least one object, and the point cloud data in the point cloud data media file includes the first point cloud data and the second point cloud data. A processing resource required for the first processing mode is different from a processing resource required for the second processing mode.

It should be noted that at least one object is a key region that needs to be presented to the user with high quality. Therefore, the first processing mode may be adopted to process the first point cloud data, which requires the use of high-quality media content and more resources need to be allocated for media processing. The second point cloud data is a non-key region in the current scene that need to be presented, so the second processing mode may be adopted to improve the user viewing experience and reduce the processing pressure on the network and terminals.

In some embodiments, a media presentation description (MPD) file corresponding to the point cloud data media file includes the object information.

The MPD file is an extensible markup language (XML) document, which may be used to describe the media content, codec, bit rate, resolution, and other information of dynamic adaptive streaming over HTTP (DASH), and how to dynamically select the most suitable media stream under different network conditions. This allows DASH to adaptively adjust the transmission of media streams according to different network bandwidths and device capabilities, thereby providing a better user experience.

In some embodiments, in the media presentation description of dynamic adaptive streaming over HTTP, the object information descriptor (OBJI) may be identified through a scheme identifier attribute (@schemeIdUri), and corresponding media data may be requested and downloaded according to the descriptor. This descriptor is a Supplemental Property element.

The object information descriptor may be included in an adaptation set, representation level, or preselection level, but the descriptor cannot appear in both two levels at the same time. If the descriptor is in a lower level, it will be reused in a higher level.

In a case where a value of object_oid_flag is 0, it refers to that the item description information is indicated in the form of a string that is readable by the human eye, and in a case where the value of object_oid_flag is 1, it refers to that the item description information is indicated in the form of OID, and a definition of the OID follows the definition of ITU-T X.660 | ISO/IEC 9834-1.

object_info_id indicates the identifier of the corresponding item information item.

object_oid indicates the item description information corresponding to the corresponding item information item, which is indicated in the form of OID.

object_label indicates the item description information corresponding to the corresponding item information item, and is indicated in the form of a string that is readable by the human eye.

In a case where a value of object_spatial_info_flag is 0, it refers to not indicating specific spatial information corresponding to the item; in a case where the value of object_spatial_info_flag is 1, it refers to indicating the specific spatial information corresponding to the item.

In a case where a value of object_slice_info_flag is 0, it refers to not indicating point cloud slice information corresponding to the item; in a case where the value of object_slice_info_flag is 1, it refers to indicating the point cloud slice information corresponding to the item.

3DPoint indicates an anchor coordinate of the spatial region where the object is located.

CuboidRegionStruct indicates the size information of the spatial region where the object is located, that is, an extension of a 3D spatial region relative to an anchor in the x, y, and z axes in the Cartesian coordinate system.

SliceMapping indicates the point cloud slice information, which indicates a number of slices associated with the 3D spatial region and identifies AVS PCC slices associated with the spatial region.

In some embodiments, as shown in Table 2, the present disclosure also provides semantics for the attributes of viewport space descriptor element.

**Table 2**

| Object information descriptor elements and attributes | Usage | Description |
|---|---|---|
| obji | 0...255 | Elements and attributes including object information |
| obji@object_info_id | 1 | Identifier for indicating a corresponding item information item |
| obji@object_oid | CM | For indicating item description information corresponding to corresponding item information item and being indicated in the form of OID, usually cannot exist simultaneously with obji@object_label |
| obji@object_label | CM | For indicating item description information corresponding to corresponding item information item, and being indicated in the form of a string that is readable by the human eye, usually cannot exist simultaneously with obji@object_label |
| obji.3DPoint | O | For indicating anchor information of an object in space |
| obji.3DPoint@x | O | For indicating X-axis coordinate of an anchor point in a spatial region where the object is located |
| obji.3DPoint@y | O | For indicating y-axis coordinate of an anchor point in a spatial region where an object is located |
| obji.3DPoint@z | O | For indicating z-axis coordinate of an anchor point in a spatial region where the object is located |
| obji.CuboidRegionStruct | O | For indicating size information of a spatial region where an object is located |
| obji.CuboidRegionStruct@x | O | Extension of a 3D spatial region relative to an anchor on the x-axis in the Cartesian coordinate system |
| obji.CuboidRegionStruct@y | O | Extension of a 3D spatial region relative to an anchor on the y-axis in the Cartesian coordinate system |
| obji.CuboidRegionStruct@z | O | Extension of a 3D spatial region relative to an anchor on the z-axis in the Cartesian coordinate system |
| obji.SliceMapping | O | For indicating point cloud slice information corresponding to an object |
| obji.SliceMapping@slice_id | 0...255 | For indicating point cloud slice identifier information corresponding to an object |
| Legend: | | |
| M=Mandatory, O=Optional, CM=Conditional Option | | |

In some embodiments, the point cloud data media file may further be acquired through the MPD file including the object information.

For example, as shown in FIG. 9, the method may also include the following S1-S4.

In S1, in a case of detecting changes in a viewing position, viewing direction, etc., of a user, whether there is an object in a current viewport of the user is determined.

Exemplarily, in a case where the viewing position, viewing direction, etc., of the user change, the client may acquire information such as a current viewing posture of the user, determine the changed viewing position, viewing direction, etc., of the user, and then determine whether there is an object in the viewing content (viewport) at the changed viewing position and viewing direction, and whether there is corresponding object information in the corresponding point cloud data media file.

Furthermore, the client may determine whether the MPD file includes object information.

In a case where the MPD file includes the object information, the following S2 and S4 are performed.

Otherwise, in the absence of object information in the MPD file, the following S3 and S4 are performed.

In S2, in a case where the MPD file includes the object information, the point cloud data media file is acquired according to the object information included in the MPD file.

Exemplarily, there is the object information in the MPD file, and the client may request a server to perform differentiated processing on the media data of the object, such as sending the viewing content to the client after media processing (such as rendering) is performed on the object, the client requesting high-quality media data of the object, or the client requesting priority transmission for the media data of the object, etc.

In S3, in a case where the MPD file does not include the object information, the client may directly request the point cloud data media file corresponding to a current viewing posture of the user.

In S4, the client performs media processing, content presentation, etc., based on the acquired point cloud data media file.

Based on the technical solutions provided in the present disclosure, for various scenes of immersive media such as a user viewport, performing media processing based on a user position, and viewport including a static object, the technical solutions provided in the present disclosure may provide various corresponding media processing modes for various scenes, thus to perform differentiated transmission and media processing based on a portion of scenes within a viewport range among the various scenes and object information of one or more point cloud data objects in the scenes, thus meeting the requirements for the various scenes of the immersive media and enhancing the flexibility of differentiated media processing. Moreover, differentiated media processing, such as using high-quality media contents for point cloud data corresponding to the point cloud data objects, and allocating more resources for media processing may be used to meet better immersive experiences and optimize the presentation quality of media. Other regions may further be adopted to lower quality media contents with being allocated fewer resources for media processing, thus to reduce the processing pressure on the network and terminals, thereby improving the transmission efficiency and processing capability of media contents.

The foregoing mainly introduces the solutions provided in the present disclosure from the perspective of interaction between various communication nodes. It can be understood that, in order to implement the above functions, the various nodes (e.g., apparatuses or devices) include corresponding hardware structures and/or software modules for implementing various functions. Those skilled in the art should easily realize that the present disclosure may be implemented in the form of hardware or a combination of hardware and computer software in combination with algorithms and steps described in the embodiments disclosed in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

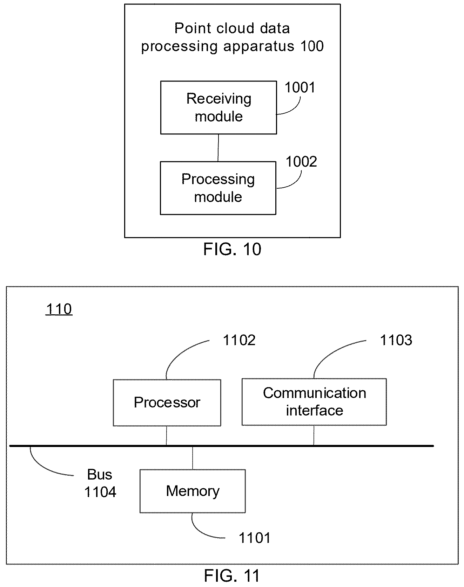

FIG. 10 is a schematic diagram of composition of a point cloud data processing apparatus provided in the embodiments of the present disclosure. As shown in FIG. 10, the point cloud data processing apparatus 100 includes a receiving module 1001 and a processing module 1002.

The receiving module 1001 is configured to receive a point cloud data media file, where the point cloud data media file includes a timed metadata track associated with an object, and/or a data box associated with the object, where the timed metadata track is used to indicate object metadata in media, and the data box is used to indicate the object metadata in the media.

The processing module 1002 is configured to acquire object information in the point cloud data media file based on the point cloud data media file for indicating the object metadata.

The processing module 1002 is further configured to perform media processing on the point cloud data in point cloud media file according to the object information.

In some embodiments, the receiving module 1001 is configured to acquire the point cloud data media file according to a viewing position of a user or a recommended viewport, where the point cloud data media file includes the object information and/or information of a viewport associated with the object.

In some embodiments, the point cloud data media file including the timed metadata track associated with the object includes: a first timed metadata track, which includes information of a dynamic object included in the media, where the first timed metadata track is identified through a type identifier of a first sample entry; and/or a second timed metadata track, which includes information of a dynamic viewport and object information in the viewport, where the second timed metadata track is identified through a type identifier of a second sample entry.

In some embodiments, the second timed metadata track sample entry includes a first identifier, where the first identifier is used to indicate a type of the viewport including the object information.

In some embodiments, the processing module 1002 is configured to identify the point cloud data in the point cloud data media file according to a metadata sample item in the first timed metadata track or the second timed metadata track, so as to obtain the object information.

In some embodiments, the point cloud data media file includes a first data box, where the first data box includes information of a static object.

In some embodiments, the processing module 1002 is configured to acquire the object information according to the first data box in a sample entry of a point cloud data media track.

In some embodiments, the processing module 1002 is further configured to identify the first data box according to a first data box identifier.

In some embodiments, a media presentation description (MPD) file corresponding to the point cloud data media file includes the object information.

In some embodiments, the point cloud data media file is acquired through the MPD file including the object information.

In some embodiments, the object information includes one or more of: an identifier of an object information item, item description information corresponding to the object information item, an anchor coordinate of a spatial region where the object is located, size information of the spatial region where the object is located, or point cloud slice information comprising the object.

In some embodiments, the processing module 1002 is configured to process first point cloud data based on a first processing mode, where the first point cloud data comprises point cloud data corresponding to at least one object, and the point cloud data in the point cloud data media file comprises the first point cloud data and second point cloud data; and process the second point cloud data based on a second processing mode, where a processing resource required for the first processing mode is different from a processing resource required for the second processing mode.

In some embodiments, the media processing includes differentiated rendering and/or differentiated data transmission.

More detailed descriptions of the receiving module 1001 and the processing module 1002 mentioned above, as well as more detailed descriptions of various technical features and beneficial effects thereof, etc., may refer to the corresponding parts of method embodiments mentioned above, which will not be repeated herein.

It should be noted that the modules in FIG. 10 may also be referred to as units, for example, the processing module may be referred to as a processing unit. In addition, in the embodiments shown in FIG. 10, names of various module may not be names shown in the figure, for example, the receiving module may also be referred to as a communication module.

If the various units in FIG. 10 are implemented in the form of the software functional module, and sold or used as independent products, they may be stored in a computer-readable storage medium. Based on this understanding, the technical solutions of the present disclosure may be essentially, or a part of the technical solutions of the present disclosure that contributes to the prior arts, or all or a portion of the technical solutions of the present disclosure may be, embodied in the form of a software product, and the computer software product may be stored in a storage medium including couples of instructions, thus to enable a computer device (may be a personal computer, a server, a network device, etc.) or a processor to perform all or a portion of steps of the method in the various embodiments of the present disclosure. The storage medium for storing a computer software product includes various types of media capable of storing program codes, such as a USB flash drive, a mobile disk, a read-only memory (ROM), a Random-access memory (RAM), a magnetic disk, or an optical disk.

In a case of implementing the functions of the above-mentioned integrated module in hardware form, a structural schematic diagram of a point cloud data processing apparatus is provided in the embodiments of the present disclosure. As shown in FIG. 11, the processing apparatus 110 includes: a memory 1101, a processor 1102, a communication interface 1103, and a bus 1104.

The memory 1101 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 1102 may implement or perform various exemplary logical blocks, modules and circuits described in combination with the present disclosure. The processor 1102 may be a central processor, a general-purpose processor, a digital signal processor, an application specific integrated circuit, a field programmable gate array, or other programmable logic component, a transistor logic component, a hardware assembly, or any combination thereof. The processor 1102 may also implement or execute various illustrative logical blocks, modules and circuits described in conjunction with the disclosed contents of the present disclosure. The processor 1102 may also be a combination that implements computing functions, such as a combination containing one or more microprocessors, a combination of a DSP (digital signal processor) and a microprocessor, etc.

The communication interface 1103 is configured to connect to other devices through a communication network. The communication network may be the Ethernet, a radio access network, a wireless local area networks (WLAN), or the like.

In some embodiments, the memory 1101 may exist independently from the processor 1102, and the memory 1101 may be connected to the processor 1102 through the bus 1104 for storing instructions or program codes. In a case where the processor 1102 invokes and executes instructions or program codes stored in the memory 1101, the method provided in the embodiments of the present disclosure may be implemented.

In embodiments, the memory 1101 may be integrated with the processor 1102.

The bus 1104 may be an extended industry standard architecture (EISA) bus, or the like. The bus 1104 may be classified as an address bus, a data bus, a control bus, or the like. For ease of representation, only one bold line is used in FIG. 11 for representing the bus 1104, but it does not mean that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the device or apparatus may be divided into different functional modules to complete all or part of the functions described above.

A computer-readable storage medium is further provided in the embodiments of the present disclosure. All or part of the processes in the above method embodiments may be implemented by relevant information of an information hardware instructed by computer programs. The programs may be stored in the above-mentioned computer-readable storage medium, and when executed, the programs may include the processes as described in the above method embodiments. The computer-readable storage medium may be an internal storage unit of a device or an apparatus in any one of the aforementioned embodiments, such as a hard disk or a memory of a computer device. The above-mentioned computer-readable storage medium may also be an external storage device of the above-mentioned device or apparatus, such as a plug-in hard disk, a smart media card (SMC), a secure digital (SD) card, a flash card, etc., equipped on the above-mentioned device or apparatus. Furthermore, the above-mentioned computer-readable storage medium may include both an internal storage unit and an external storage device of the above-mentioned device or apparatus. The above-mentioned computer-readable storage medium is configured to store the above-mentioned computer programs and other programs and data required by the above-mentioned device or apparatus. The above-mentioned computer-readable storage medium may further be configured to temporarily store data that has been output or is to be output. For example, the above-mentioned computer-readable storage medium may include a non-transitory computer-readable storage medium.

A computer program product is further provided in the embodiments of the present disclosure. The computer product includes computer programs that, upon being run on a computer, enable the computer to perform any one of the method provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, wordings "comprise/comprises/comprising" do not exclude other components or steps, and wordings "a/an" and "one" do not exclude a case of a number of a plurality. A single processor or other units may implement couples of functions listed in the claims. Some measures are recorded in different dependent claims, but it does not mean that these measures cannot be combined to produce good effects.

Although the present disclosure is described in conjunction with specific features and embodiments thereof, obviously, various modifications and combinations may be made thereto without departing from the spirit and scope of the present disclosure. Accordingly, the specification and accompanying drawings herein are merely exemplary illustration of the present disclosure defined by the claims, and are deemed to cover any and all modifications, variations, combinations or equivalents within the scope of the present disclosure. Obviously, those skilled in the art can make various modifications and variations to the present disclosure without departing from the scope of the present disclosure. In this way, if these modifications and variations in the present disclosure fall within the scope of the claims and their equivalent technologies of the present disclosure, then the present disclosure is also intended to include these modifications and variations. The above descriptions are merely specific implements of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A point cloud data processing method, **characterized by** comprising:
receiving a point cloud data media file, wherein the point cloud data media file comprises a timed metadata track associated with an object, and/or a data box associated with the object, wherein the timed metadata track is used to indicate object metadata in media, and the data box is used to indicate the object metadata in the media;
acquiring object information in the point cloud data media file based on the point cloud data media file for indicating the object metadata; and
performing media processing on point cloud data in the point cloud data media file according to the object information.

2. The method according to claim 1, wherein receiving the point cloud data media file comprises:
acquiring the point cloud data media file according to a viewing position of a user or a recommended viewport, wherein the point cloud data media file comprises the object information and/or information of a viewport associated with the object.

3. The method according to claim 1 or 2, wherein the point cloud data media file comprising the timed metadata track associated with the object comprises:
a first timed metadata track, comprising information of a dynamic object comprised in the media, wherein the first timed metadata track is identified through a type identifier of a first sample entry; and/or
a second timed metadata track, comprising information of a dynamic viewport and object information in the viewport, wherein the second timed metadata track is identified through a type identifier of a second sample entry.

4. The method according to claim 3, wherein the second timed metadata track sample entry comprises a first identifier, wherein the first identifier is used to indicate a type of the viewport comprising the object information.

5. The method according to claim 3, wherein acquiring the object information in the point cloud data media file based on the point cloud data media file for indicating the object metadata comprises:
identifying the point cloud data in the point cloud data media file according to a metadata sample item in the first timed metadata track or the second timed metadata track, so as to obtain the object information.

6. The method according to claim 1 or 2, wherein the point cloud data media file comprises a first data box, wherein the first data box comprises information of a static object.

7. The method according to claim 6, wherein acquiring the object information in the point cloud data media file based on the point cloud data media file for indicating the object metadata comprises:
acquiring the object information according to the first data box in a sample entry of a point cloud data media track.

8. The method according to claim 7, further comprising:
identifying the first data box according to a first data box identifier.

9. The method according to claim 1, wherein a media presentation description (MPD) file corresponding to the point cloud data media file comprises the object information.

10. The method according to claim 9, wherein the point cloud data media file is acquired through the MPD file comprising the object information.

11. The method according to claim 1, wherein the object information comprises one or more of:
an identifier of an object information item, item description information corresponding to the object information item, an anchor coordinate of a spatial region where the object is located, size information of the spatial region where the object is located, or point cloud slice information comprising the object.

12. The method according to claim 1, wherein performing media processing on the point cloud data in the point cloud data media file according to the object information comprises:
processing first point cloud data based on a first processing mode, wherein the first point cloud data comprises point cloud data corresponding to at least one object, and the point cloud data in the point cloud data media file comprises the first point cloud data and second point cloud data;
processing the second point cloud data based on a second processing mode, wherein a processing resource required for the first processing mode is different from a processing resource required for the second processing mode.

13. The method according to claim 1, wherein the media processing comprises differentiated rendering and/or differentiated data transmission.

14. A point cloud data processing apparatus, **characterized by** comprising: a memory and a processor, wherein the memory is coupled to the processor, the memory is configured to store instructions executable for the processor, and the processor is configured, upon the instructions being executed, to perform the method according to any one of claims 1 to 13.

15. A computer-readable storage medium, **characterized in that** the computer-readable storage medium stores computer instructions that, upon being run on a computer, enable the computer to execute the method according to any one of claims 1 to 13.
